# EUROPÄISCHE PATENTANMELDUNG

(11) **EP 2 211 288 A1**
(43) Veröffentlichungstag der Anmeldung: **28.07.2010**
(21) Anmeldenummer: 10000466.2
(22) Anmeldetag: 19.01.2010
(51) Int. Cl.: G06F 21/00

(54) **Verfahren zum Ausführen einer Fehlerroutine durch einen Prozessor bei einem Angriff auf einen Datenträger**

(30) Priorität: 21.01.2009 DE 102009005483
(71) Anmelder: Giesecke & Devrient GmbH, 81677 München (DE)
(72) Erfinder: Baldischweiler, Michael, 81825 München (DE); Wirén, Arvid, 81927 München (DE)

(57) **Zusammenfassung**

Die Erfindung betrifft ein Verfahren zum Ausführen einer Fehlerroutine durch einen Prozessor bei einem Angriff, insbesondere einem DFA-Angriff, auf einen Datenträger, wobei die Fehlerroutine eine Endlosschleife (L) mit vorgegebener Anfangsadresse (SA) in einem Speicherbereich des Datenträgers und mit einer Reihe von Sprungbefehlen verwendet. Die Sprungbefehle der Endlosschleife sind dabei derart ausgestaltet, dass mit jedem Sprungbefehl auf die vorgegebene Anfangsadresse (SA) zurückgesprungen wird. Das erfindungsgemäße Verfahren bietet einen verbesserten Schutz gegen Angriffe, insbesondere gegen mehrfache DFA-Angriffe.

## Beschreibung

Die Erfindung betrifft ein Verfahren zum Ausführen einer Fehlerroutine durch einen Prozessor bei einem Angriff, insbesondere einem DFA-Angriff, auf einen Datenträger sowie einen entsprechenden Datenträger zur Durchführung des Verfahrens.

Bei der Durchführung von sicherheitskritischen Anwendungen auf einem Datenträger, insbesondere einem tragbaren Datenträger (z.B. einer Chipkarte), ist ein Schutz des Datenträgers vor unberechtigten Angriffen erforderlich. Ein Beispiel einer unberechtigten Manipulation eines tragbaren Datenträgers ist die Störung der Strom- und Taktversorgung des die Anwendung ausführenden Prozessors durch Spannungsspitzen bzw. Lichtblitze. Ein weithin aus dem Stand der Technik bekannter Angriff ist dabei die sog. DFA oder differentielle Fehleranalyse (DFA = Differential Fault Analysis), mit der sich der geheime Schlüssel einer kryptographischen Berechnung auf einem Datenträger ermitteln lässt. Bei einem DFA-Angriff werden in dem Prozessor, der die kryptographische Berechnung durchführt, Berechnungsfehler ausgelöst, was durch die oben erwähnten Spannungsspitzen bzw. Lichtblitze erreicht werden kann. Aus den erzeugten Fehlern kann dann mit mathematischen Methoden der für die kryptographische Berechnung verwendete geheime Schlüssel ermittelt werden.

Um Angriffe auf Datenträger zu vermeiden, sind aus dem Stand der Technik verschiedene Verfahren bekannt. Beispielsweise wird bei der Erkennung eines Angriffs, mit dem die durch einen Prozessor durchgeführte Berechnung manipuliert wird, mittels einer Fehlerroutine eine Endlosschleife erzeugt, welche die Fortsetzung der eigentlichen Programmroutine verhindert. Diese Endlosschleife besteht aus Sprungbefehlen, welche immer zu der Kommando-Adresse des jeweiligen Sprungbefehls zurückspringen. Insbesondere bei mehrfachen DFA-Angriffen können dabei dennoch die Befehle in der Endlosschleife derart manipuliert werden, dass die Schleife verlassen wird und der eigentliche Programmcode ausgeführt wird.

Aufgabe der Erfindung ist es, ein Verfahren zum Ausführen einer Fehlerroutine durch einen Prozessor bei einem Angriff auf einen Datenträger sowie einen entsprechenden Datenträger zu schaffen, welche zuverlässig Schutz gegen Angriffe auf den Datenträger gewährleisten.

Diese Aufgabe wird durch das Verfahren gemäß Patentanspruch 1 sowie den Datenträger gemäß Patentanspruch 10 gelöst. Weiterbildungen der Erfindung sind in den abhängigen Ansprüchen definiert.

In dem erfindungsgemäßen Verfahren wird bei der Detektion eines Angriffs eine Fehlerroutine ausgeführt, welche eine Endlosschleife mit vorgegebener Anfangsadresse in einem Speicherbereich des Datenträgers und mit einer Reihe von Sprungbefehlen erzeugt. Die Detektion eines Angriffs kann auf beliebige Art und Weise erfolgen, wobei hierzu dem Fachmann geeignete Verfahren aus dem Stand der Technik bekannt sind. Unter dem Begriff "Reihe von Sprungbefehlen" wird im Sinne der Erfindung eine Mehrzahl von aufeinander folgenden Sprungbefehlen verstanden, wobei zwischen zwei aufeinander folgenden Sprungbefehlen auch weitere andersartige Befehle ausgeführt werden können.

Das erfindungsgemäße Verfahren zeichnet sich dadurch aus, dass die Sprungbefehle in der Endlosschleife derart ausgestaltet sind, dass mit jedem Sprungbefehl auf die vorgegebene Anfangsadresse zurückgesprungen wird.

Durch die Verwendung von derartigen Sprungbefehlen wird erfindungsgemäß sichergestellt, dass nach Ausführung eines Sprungbefehls in der Endlosschleife immer zum Anfang der Schleife zurückgegangen wird, so dass ein Verlassen der Schleife durch einen Angriff mit mehrfachen Befehlsmanipulationen innerhalb der Schleife effektiv vermieden wird. Im Unterschied hierzu erfolgt bei den bekannten Verfahren nach einer Manipulation eine Weiterverarbeitung von Sprungbefehlen innerhalb der Endlosschleife ohne Rücksprung zu der Anfangsadresse, sofern sich die Endlosschleife nach der Manipulation wieder einsynchronisiert.

Der bevorzugte Anwendungsbereich des erfindungsgemäßen Verfahrens ist der Schutz eines tragbaren Datenträgers, insbesondere einer Chipkarte, wobei die Fehlerroutine mit einem Mikroprozessor des tragbaren Datenträgers ausgeführt wird.

In einer besonders bevorzugten Ausführungsform des erfindungsgemäßen Verfahrens werden zwischen zwei aufeinander folgenden Sprungbefehlen in der Endlosschleife ein oder mehrere Wartebefehle ausgeführt, wobei jeder Wartebefehl ein Pausieren des Prozessors für eine vorbestimmte Zeitspanne veranlasst. Vorzugsweise wird dabei die Anzahl an Wartebefehlen derart groß gewählt, dass eine Manipulation eines Befehls in der Endlosschleife durch einen Angriff nicht zum Verlassen der Schleife führt. Auf diese Weise wird ein besonders guter Schutz vor Angriffen erreicht, da sicher verhindert wird, dass irgendeine Manipulation zu einem Verlassen der Schleife und damit zur unerwünschten Ausführung von nachfolgendem Code führt. Die entsprechende Anzahl an Wartebefehlen, welche ein Verlassen der Schleife bei einer Manipulation verhindert, hängt dabei von speziellen Faktoren ab, insbesondere von der Konfiguration des Prozessors und vom verwendeten Befehlssatz. Da diese Faktoren bekannt sind, kann die geeignete Anzahl an Sprungbefehlen basierend auf diesen Faktoren problemlos bestimmt werden.

In einer weiteren Ausführungsform des erfindungsgemäßen Verfahrens umfasst die Endlosschleife eine Mehrzahl von unmittelbar aufeinander folgenden Befehlsblöcken, wobei jeder Befehlsblock aus einem Sprungbefehl und einer vorgegebenen Anzahl von darauf folgenden Wartebefehlen besteht und wobei sich an den letzten Befehlsblock der Mehrzahl von Befehlsblöcken ein einzelner Sprungbefehl anschließt. Hierdurch wird eine einfache Generierung einer Endlosschleife zur effizienten Abwehr von Angriffen erreicht.

In einer weiteren Ausgestaltung des erfindungsgemäßen Verfahrens basiert die Fehlerroutine auf einer Assembler-Routine, wobei die in einer Assembler-Programmiersprache vorliegenden Assembler-Befehle der Assembler-Routine durch einen Assembler in OP-Codes des verwendeten Prozessors übersetzt werden. Die Sprungbefehle sind dabei insbesondere Assembler-Befehle in der Form von sog. jmp-Befehlen, welche hinlänglich aus der Assembler-Programmierung bekannt sind. Vorzugsweise sind die jmp-Befehle sog. shortjump-Befehle, mit denen die Anzahl von möglichen Manipulationen von entsprechenden OP-Codes gering gehalten wird und hierdurch eine geringe Codegröße für die Fehlerroutine erreicht wird. Basiert die Fehlerroutine auf einer Assembler-Routine, wird für die oben erwähnten Wartebefehle vorzugsweise der aus der Assembler-Programmierung bekannte nop-Befehl verwendet (nop = no operation).

Neben dem oben beschriebenen Verfahren umfasst die Erfindung ferner einen Datenträger, insbesondere einen tragbaren Datenträger, wie z.B. eine Chipkarte, wobei der Datenträger einen Prozessor aufweist, welcher dazu eingerichtet ist, eine Fehlerroutine bei einem Angriff, insbesondere einem DFA-Angriff, auf den Datenträger derart durchzuführen, dass eine Endlosschleife mit vorgegebener Anfangsadresse und mit einer Reihe von Sprungbefehlen erzeugt wird, wobei mit jedem Sprungbefehl der Endlosschleife auf die vorgegebene Anfangsadresse zurückgesprungen wird. Der Datenträger ist dabei vorzugsweise derart ausgestaltet, dass jede Variante des oben beschriebenen Verfahrens mit dem Datenträger durchführbar ist.

Durch den vorliegenden Ansatz können als tragbare oder fest in ein Gerät installierte Datenträger beispielsweise eine Chipkarte, ein Sicherheitsmodul, eine sichere Massenspeicherkarte oder ein USB-Token abgesichert werden.

Ausführungsbeispiele der Erfindung werden nachfolgend anhand der beigefügten Figuren detailliert beschrieben.

Es zeigen:
- Fig.1: ein Ausführungsbeispiel einer Assembler-Fehlerroutine gemäß dem Stand der Technik zum Schutz vor DFA-Angriffen; und
- Fig. 2: eine erfindungsgemäße Ausführungsform einer Assembler-Fehlerroutine zum verbesserten Schutz vor DFA-Angriffen.

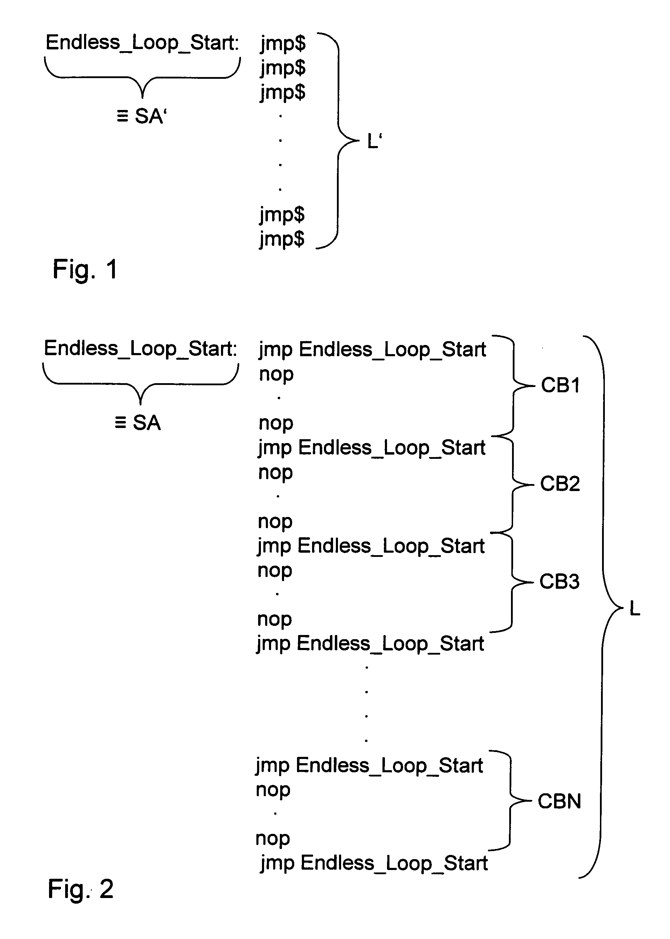

Durch einen DFA-Angriff wird ein kryptographischer Algorithmus, der durch einen Mikroprozessor der Chipkarte durchgeführt wird, derart beeinflusst, dass es durch Veränderung von Maschinenbefehlen zu falschen Berechnungen kommt. Basierend auf den hierdurch erzeugten Fehlern kann dann der geheime Schlüssel des kryptographischen Algorithmus ermittelt werden. Zum Schutz gegen solche DFA-Angriffe ist deshalb sicherzustellen, dass der kryptographische Algorithmus bei der Detektion eines solchen Angriffs nicht weiter durchgeführt wird, so dass kein Berechnungsergebnis vorliegt, aus dem wiederum der entsprechende geheime Schlüssel des Algorithmus hergeleitet werden kann. Fig. 1 zeigt eine Assembler-Routine, mit der gemäß dem Stand der Technik eine weitere Ausführung eines Algorithmus bei einem erkannten DFA-Angriff vermieden wird. Hier und im Folgenden wird dabei vorausgesetzt, dass der DFA-Angriff an sich bereits erkannt wurde, wobei entsprechende Verfahren zur Erkennung solcher Angriffe hinlänglich aus dem Stand der Technik bekannt sind.

Gemäß dem vorbekannten Ausführungsbeispiel der Fig. 1 wird eine Endlosschleife L' bei einem erkannten DFA-Angriff generiert, wobei diese Endlosschleife in Assembler-Programmiersprache wiedergegeben ist. Die Endlosschleife L' besteht aus einer Vielzahl von aufeinander folgenden Sprungbefehlen jmp$, wobei gemäß dem Assembler-Befehl jmp$ zur eigenen Kommando-Adresse des Sprungbefehls zurückgesprungen wird. Die Schleife L' beginnt an einer entsprechenden Marke "Endless_Loop_Start", der eine Anfangsadresse in einem entsprechenden Speicher der Chipkarte zugeordnet ist, auf den der Mikroprozessor der Chipkarte zugreift. Diese Anfangsadresse ist in Fig. 1 mit SA' bezeichnet.

Bei einem DFA-Angriff wird die Endlosschleife L' durchlaufen, wobei durch die Sprungbefehle jump$ ein Verlassen der Schleife verhindert wird. Bei einem DFA-Angriff, der einen OP-Code eines zugeordneten Sprungbefehls verändert, werden gemäß der Ausführungsform der Fig. 1 jmp$-Befehle in der Schleife weiterverarbeitet, sofern sich die Schleife nach dem Angriff wieder einsynchronisiert, d.h. sofern der veränderte OP-Code einem Befehl in der Schleife entspricht. Es erweist sich jedoch als nachteilhaft, dass nach einer Einsynchronisierung nicht zu einer festen Adresse im Speicher zurückgesprungen wird, so dass bei mehrfachen DFA-Angriffen die Gefahr zunimmt, dass die Fehlerroutine verlassen wird und somit unerwünschter nachfolgender Programmcode des Algorithmus ausgeführt wird.

Fig. 2 zeigt ein erfindungsgemäßes Ausführungsbeispiel einer DFA-Fehlerroutine, um den Schutz vor mehrfachen DFA-Angriffen auf eine Chipkarte zu erhöhen. Es handelt sich dabei um eine Assembler-Routine, welche analog zu Fig. 1 als Endlosschleife ausgestaltet ist und mit dem Bezugszeichen L bezeichnet ist. Der Anfang der Schleife ist wiederum durch eine Marke "End-less_Loop_Start" markiert, der eine entsprechende Zieladresse im Speicher der Chipkarte zugeordnet ist. In Fig. 2 ist diese Zieladresse als SA bezeichnet. Im Unterschied zur Ausführungsform gemäß Fig. 1 umfasst die Fehlerroutine nunmehr keine einfache Aneinanderreihung von jmp$-Befehlen, sondern sie beinhaltet eine Anzahl von N aufeinander folgenden Code-Blöcken CB1, CB2, CB3, ..., CBN. Jeder Code-Block beginnt mit einem Sprungbefehl "jmp Endless_Loop_Start", wobei mit diesem Sprungbefehl - im Unterschied zur Ausführungsform der Fig. 1 - nicht mehr auf die aktuelle Kommandoadresse des Sprungbefehls, sondern an die Anfangsadresse SA der Endlosschleife L zurückgesprungen wird. Darüber hinaus folgen auf jeden Sprungbefehl "jmp Endless_Loop_Start" der jeweiligen Code-Blöcke CB1 bis CBN eine vorbestimmte Anzahl von nop-Assembler-Befehlen, wobei bei einem nop-Befehl durch den Mikroprozessor keine Operation durchgeführt wird, d.h. der Mikroprozessor legt hierdurch für einen Arbeitszyklus eine Pause ein.

In der Endlosschleife L der Fig. 2 ergeben sich durch die fortschreitende Länge der Routine immer weiter vom aktuellen Sprungbefehl "jump End-less_Loop_Start" entfernte Sprungziele, so dass jeder Sprungbefehl verschiedenen OP-Codes entspricht. Bei einem DFA-Angriff auf die Endlosschleife L wird verhindert, dass nach Ende der DFA-Störung der Algorithmus mit einem manipulierten OP-Code ausgeführt wird, der aus der Schleife L heraus führt. Dies wird dadurch erreicht, dass die Anzahl der nop-Befehle in den jeweiligen Code-Blöcken derart groß gewählt ist, dass sich die Fehlerroutine für jede mögliche Kombination von falschen OP-Codes mit den nop-Befehlen wieder sicher in die Endlosschleife synchronisiert. Nach Einsynchronisierung erfolgt dabei durch den entsprechend aufgerufenen Befehl "jump End-less_Loop_Start" - im Unterschied zu Fig. 1 - ein Rücksprung zu der Anfangsadresse SA der Schleife L, so dass auch beim nächsten bzw. bei mehrfachen DFA-Angriffen eine gleichbleibende DFA-Resistenz bereits bei kürzerer Code-Größe als in dem Ausführungsbeispiel der Fig. 1 erreicht wird.

Die genaue Anzahl an erforderlichen nop-Befehlen bzw. verwendeten Code-Blöcken CB1 bis CBN zur Verhinderung des Verlassens der Endlosschleife bei einer DFA-Störung hängt von dem verwendeten Mikroprozessor und dem Befehlssatz ab. Je nach Mikroprozessor und Befehlssatz wird somit die Anzahl der Code-Blöcke und nop-Befehle geeignet gewählt, wobei die geeignete Anzahl durch einen Fachmann problemlos bestimmt werden kann.

In einer besonders bevorzugten erfindungsgemäßen Ausführungsform wird für den Sprungbefehl "jmp Endless_Loop_Start" ein sog. shortjump-Assembler-Befehl verwendet, der in der Regel eine kürzere OP-Code-Länge als ein longjump-Befehl besitzt und damit zu einer geringen Anzahl von möglichen falschen, durch einen DFA-Angriff veränderten OP-Codes führt. Durch die Verwendung eines shortjump-Befehls wird dabei die Codelänge durch die maximal mögliche Entfernung des Sprungziels, d.h. der Startadresse SA, von dem letzten Sprungbefehl begrenzt.

Wie sich aus den obigen Ausführungen ergibt, wird durch das beschriebene Ausführungsbeispiel der Erfindung ein verbesserter Schutz vor DFA-Angriffen dadurch erreicht, dass in einer Endlosschleife Sprungbefehle eingesetzt werden, mit denen immer zu der Anfangsadresse der Schleife zurückgekehrt wird. Darüber hinaus wird ein Verlassen der Schleife nach einer durch eine DFA-Störung bewirkten Manipulation eines OP-Codes durch eine ausreichend große Anzahl von nop-Befehlen verhindert.

## Patentansprüche

1. Verfahren zum Ausführen einer Fehlerroutine durch einen Prozessor bei einem Angriff, insbesondere einem DFA-Angriff, auf einen Datenträger, wobei die Fehlerroutine eine Endlosschleife (L) mit vorgegebener Anfangsadresse (SA) in einem Speicherbereich des Datenträgers und mehrere Sprungbefehle umfasst,
**dadurch gekennzeichnet, dass**
durch die mehreren Sprungbefehle in der Endlosschleife (L) auf die vorgegebene Anfangsadresse (SA) zurückgesprungen wird.

2. Verfahren nach Anspruch 1, **dadurch gekennzeichnet**, das Verfahren auf einem tragbaren Datenträger, insbesondere einer Chipkarte, durch einen Mikroprozessor des tragbaren Datenträgers ausgeführt wird.

3. Verfahren nach Anspruch 1 oder 2, **dadurch gekennzeichnet, dass** zwischen zwei aufeinander folgenden Sprungbefehlen in der Endlosschleife (2) ein oder mehrere Leerbefehle ausgeführt werden.

4. Verfahren nach Anspruch 3, **dadurch gekennzeichnet, dass** als Leerbefehle ein Befehl verwendet wird, dessen OP-Code ein Byte lang ist.

5. Verfahren nach Anspruch 3 oder 4, **dadurch gekennzeichnet, dass** als Leerbefehl ein NOP-Befehl verwendet wird, der keine Operation des Prozessors auslöst.

6. Verfahren nach einem der Ansprüche 3 bis 5, **dadurch gekennzeichnet, dass** die Anzahl der aufeinanderfolgenden Leerbefehle derart groß gewählt ist, dass der auf die Leerbefehle folgende Sprungbefehl auch nach einem Angriff als solcher abgearbeitet wird.

7. Verfahren nach einem der Ansprüche 3 bis 6, **dadurch gekennzeichnet, dass** die Anzahl der aufeinanderfolgenden Leerbefehle abhängig von dem Mikroprozessor und/oder dem verwendeten Befehlssatz gewählt ist.

8. Verfahren nach einem der Ansprüche 3 bis 7, **dadurch gekennzeichnet, dass** die Anzahl der aufeinanderfolgenden Leerbefehle derart groß gewählt ist, dass ein Sprungbefehl sjmp nicht über den nachfolgenden Sprungbefehl in der Endlosschleife springen kann.

9. Verfahren nach einem der Ansprüche 3 bis 8, **dadurch gekennzeichnet, dass** die Endlosschleife (L) eine Mehrzahl von unmittelbar aufeinander folgenden Befehlsblöcken (CB1, CB2, ..., CBN) umfasst, wobei jeder Befehlsblock (CB1, CB2, ..., CBN) aus einem Sprungbefehl und einer vorgegebenen Anzahl von darauf folgenden Leerbefehlen besteht und wobei sich an den letzten Befehlsblock (CBN) der Mehrzahl von Befehlsblöcken (CB1, CB2, ..., CBN) ein einzelner Sprungbefehl anschließt.

10. Verfahren nach einem der Ansprüche 1 bis 9, **dadurch gekennzeichnet, dass** eine Manipulation eines Befehls in der Endlosschleife (L) durch einen Angriff nicht zum Verlassen der Schleife führt.

11. Verfahren nach einem der Ansprüche 1 bis 10, **dadurch gekennzeichnet, dass** die Sprungbefehle Assembler-Befehlen in der Form von jmp-Befehlen entsprechen, welche vorzugsweise short-jmp-Befehle sind.

12. Datenträger, insbesondere Chipkarte, **dadurch gekennzeichnet, dass** der Datenträger einen Prozessor umfasst, welcher dazu eingerichtet ist, eine Fehlerroutine bei einem Angriff, insbesondere einem DFA-Angriff, auf den Datenträger derart durchzuführen, dass eine Endlosschleife (L) mit vorgegebener Anfangsadresse (SA) in einem Speicherbereich des Datenträgers und mit mehreren Sprungbefehlen verwendet wird, wobei mit den mehreren Sprungbefehlen der Endlosschleife auf die vorgegebene Anfangsadresse zurückgesprungen wird.

13. Datenträger nach Anspruch 12, **dadurch gekennzeichnet, dass** mit dem Datenträger ein Verfahren nach einem der Ansprüche 1 bis 11 durchführbar ist.
